(19) Europäisches Patentamt
European Patent Office
Office européen des brevets

(11) **EP 2 093 052 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(51) Int Cl.:
*C03C 27/12* (2006.01)     *B32B 17/10* (2006.01)
*E06B 3/67* (2006.01)      *C03C 17/36* (2006.01)

(21) Anmeldenummer: **09001574.4**

(22) Anmeldetag: **05.02.2009**

(54) **Glasbauteil, umfassend wenigstens ein Glaselement aus einem herkömmlichen Glas und einer Funktionsbeschichtung**

Glass component comprising at least one glass element from a conventional glass and a functional coating

Composant en verre comprenant au moins un élément en verre traditionnel et d'un revêtement de fonction

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **19.02.2008 DE 202008002287 U**

(43) Veröffentlichungstag der Anmeldung:
**26.08.2009 Patentblatt 2009/35**

(73) Patentinhaber: **Schott AG**
**55122 Mainz (DE)**

(72) Erfinder: **Albrecht, Frank**
**37627 Lenne (DE)**

(74) Vertreter: **Sawodny, Michael-Wolfgang**
**Dreiköniggasse 10**
**89073 Ulm (DE)**

(56) Entgegenhaltungen:
**EP-A- 1 388 413      BE-A3- 1 016 510**
**DE-B- 1 010 247      FR-A- 1 155 321**
**GB-A- 594 651       GB-A- 599 675**

- **"Transparenz und Sinnlichkeit" 2001, EDITION SCHOTT ISBN 3-930542-31-5 , 31073 GRÜNENPLAN , XP002528679 * Seite 30 - Seite 35 ***
- **SCHOTT: "Historisch konsequent und technisch zukunftsweisend"[Online] November 2008 (2008-11), Seiten 1-6, XP002528862 Gefunden im Internet: URL:http://www.schott.com/ architecture/ger man/download/0366_des_pp_ restaurierung_fin al.pdf> [gefunden am 2009-05-20]**

**Beschreibung**

Die Erfindung betrifft ein Glasbauteil, umfassend wenigstens ein Glaselement, wobei das Glaselement aus einem herkömmlichen Glas wie Schleuderglas, Zylinderglas, Ziehglas, Gussglas, einem geblasenen Glas oder einem Glas mit einer ähnlichen Struktur besteht.

Bei Glaselementen, die in historischen Gebäuden verbaut werden beziehungsweise bei Glaselementen, die aus einem herkömmlichen Glas bestehen wie zum Beispiel Schleuderglas, Zylinderglas, Ziehglas, Gussglas, einem geblasenen Glas oder einem Glas mit einer ähnlichen Struktur wird im Allgemeinen nur eine einzelne Glasscheiben bestehend aus einem vorgenannten herkömmlichen Glas verwandt, das auch als historisches Glas bezeichnet wird. Glasscheiben beziehungsweise Glaselemente, welche aus einem derartigen Glas hergestellt werden, weisen eine irreguläre Oberfläche auf, die im Wesentlichen zu dem historischen Aussehen der Glasscheibe und damit des Gebäudes beitragen.

Die Verwendung nur einer einzelnen historischen Glasscheibe war nachteilig mit Bezug auf die Bruchfestigkeit und die Wärmedämmung. Um die historischen Scheiben beispielsweise vor Bruch zu schützen, schlägt die DE 196 07 031 einen Schutzglasverbund aus einem derartigen historischen Glas und einem Floatglas vor. Um die Wärmeeigenschaften zu verbessern zeigt beispielsweise die Veröffentlichung Transparenz und Sinnlichkeit, Leipra-Verlag, 2001, S.31 einen Isolierglasverbund aus einem historischen Glas und beispielsweise einem Floatglas.

Der in dieser Schrift beschriebene Isolierglasverbund bestehend aus einem historischen Glas und einem Floatglas weist auf dem Floatglas eine Wäremfunktionsbeschichtung auf. Eine spezielle Schutzwirkung für hinter dem Glasbauteil liegende historische Objekte wie beispielsweise Wandmalereien werden durch einen derartigen Isolierglasverbund nicht erreicht.

Alternativ zu dem in oben genannter Schriften gezeigten Isolierglasverbund zeigt die EP 03 076 777 A ein Verbundglas aus einem historischen Glas und einem Floatglas, die miteinander durch Verbindungsmittel, beispielsweise einem Gießharz, zu einem Glasverbundelement verbunden sind.

Eine Seite der beiden das Verbundelement ausbildenden Glasscheiben besitzt gemäß der EP 03 076 777 A eine im Wesentlichen transparente, hitzeresistente Beschichtung.

Auch das Verbundelement aus der EP 03 076 777.6, bestehend aus einem historischen Glas und einem Floatglas, kann keinen ausreichenden Schutz von hinter dem Glas angeordneten historischen Objekten wie historischen Fenstern, historischen Fassadenteilen gegen die Einwirkung von im von außen auftreffenden Licht, beispielsweise in der Sonnenstrahlung enthaltenen UV-Strahlung und gegen unzulässige Erwärmung zur Verfügung stellen.

Aus der GB 599 675 ist ein Wärme-reflektierender blendfreier optischer Filter bekannt geworden, der nur für einen Teil des sichtbaren Lichtes durchlässig ist.

Die GB 594 651 zeigt einen laminierten Glasartikel, der einen Teil der Infrarot-Strahlung absorbiert. Um die ultraviolette Strahlung zu absorbieren, umfasst eine oder beide der Glasscheiben des laminierten Glasartikels ein Glasmaterial, das Cer oder ferritisches Eisen enthält.

Aufgabe der Erfindung ist es, die oben beschriebenen Nachteile zu vermeiden und ein historisches anmutendes Glasbauteil mit wenigstens einem Glaselement aus einem herkömmlichen Glas zur Verfügung zu stellen, das einen ausreichenden Schutz, der hinter dem historischen Glas liegenden Objekte gegen äußere Einwirkungen zur Verfügung stellt.

Erfindungsgemäß wird diese Aufgabe durch ein Glasbauteil nach einem der unabhängigen Ansprüche 1, 2, 4 oder 12 gelöst. Gemäß der Erfindung wird eine Filterwirkung auch im blauvioletten Wellenlängenbereich von 380 nm bis 420 nm zur Verfügung gestellt.

In einer ersten Ausgestaltung das herkömmliche Glas eine Beschichtung und/oder eine Folie aufweist, die eine Filterwirkung und/oder Absorption für elektromagnetische Strahlung im ultravioletten oder infraroten Wellenlängenbereich zeigt.

In einer weiteren erfindungsgemäßen Ausgestaltung kann vorgesehen sein, dass das Glasbauteil ein Glasverbundelement umfasst, wobei das Glasverbundelement ein historisches Glas umfasst sowie ein Floatglas, und das historische Glaselement mit dem Floatglas durch ein Verbindungsmittel, beispielsweise ein Harz oder eine Folie, verbunden ist und das zweite Glaselement eine Beschichtung und/oder eine Folie aufweist, die eine Filterwirkung und/oder eine hohe Absorption für elektromagnetische Strahlung im UV-Wellenlängenbereich und/oder IR-Wellenlängenbereich zeigt. Bei der zweiten Ausgestaltung der Erfindung ist somit die funktionelle Beschichtung und/oder Folie in das Glasverbundelement eingebracht.

In einer fortgebildeten Ausführungsform kann vorgesehen sein, dass das Glasbauteil ein weiteres Glaselement, nämlich ein drittes Glaselement, aufweist. Dies ist insbesondere dann von Vorteil, wenn das Glasbauteil wenigstens ein Glasverbundelement umfasst. Mit einem dritten Glaselement lässt sich zusammen mit dem Glasverbundelement, bestehend aus zwei Glaselementen, dann ein Isolierglasverbund aufbauen, bei dem zwei Scheiben voneinander beabstandet angeordnet sind mit einem Scheibenzwischenraum, wobei der Scheibenzwischenraum mit einem Gas, beispielsweise einem Edelgas, enthaltend die Elemente Argon oder Xenon oder Krypton, befüllt ist. Die beiden scheibenförmigen Elemente eines Isolierglasverbundes, bestehend aus dem Glasverbundelement sowie dem dritten Glaselement, werden durch ein Metallstück, bevorzugt enthaltend Aluminium, beabstandet zueinander angeordnet. Der Abstand der Scheibenelemente liegt im Bereich 5 - 50 mm, bevorzugt im Bereich 10 - 30 mm.

In einer weiteren Ausführungsform der Erfindung kann vorgesehen sein, dass bei einem Glasverbundelement bestehend aus wenigstens einem ersten Glaselement aus einem herkömmlichen bzw.- historischen Glas wie Schleuderglas, Zylinderglas, Ziehglas, Gussglas, einem geblasenen Glas oder einem Glas mit ähnlicher Struktur und wenigstens einem mit dem ersten Glaselement durch eine Verbindungsfolie oder eine Verbindungssubstanz verbundenen zweiten Glaselement die Verbindungsfolie selbst oder die Verbindungssubstanz eine Filterwirkung und/oder eine Absorption für elektromagnetische Strahlung im UV-Wellenlängenbereich und/oder im IR-Wellenlängenbereich zeigt.

Die Funktionsbeschichtung mit Filterwirkung kann in einer ersten Ausgestaltung der Erfindung als Wärmedämmbeschichtung oder als Sonnenschutzbeschichtung ausgeführt sein. Wärmedämmbeschichtungen und Sonnenschutzbeschichtungen sind beispielsweise aus dem Buch Hans-Joachim Gläser: "Dünnfilmtechnologie auf Flachglas", Verlag Karl Hofmann, Schorndorf, 1999, Seiten 155-200 und 219-228 bekannt geworden.

Mögliche wärmedämmende Beschichtungen sind Schichtsysteme, die transparente Silberschichten umfassen. Sonnenschutzbeschichtungen umfassen ebenfalls Silberschichten.

Da ungeschützte Silbereinfachschichten in hohem Maße korrosionsanfällig sind, werden diese Schichten bei Verwendung als Wärmedämmbeschichtungen in geeignete Schutzschichten eingebettet, um die Silberschichten gegen chemische und mechanische Angriffe beständig zu machen.

Ein derartiges wärmedämmendes Schichtsystem umfasst beispielsweise eine Deckschicht, bestehend beispielsweise aus einem Bi-Oxid, $SnO_2$, $TiO_2$, ZnO oder $Si_3N_4$, einer darauf folgenden Blockierschicht aus z. B. NiCr bzw. teiloxidischem Al, Ti, Zn, Pb der nachfolgenden Silberschicht sowie einer unter der Silberschicht angeordneten Blockierschicht und einer Haftschicht, die z. B. aus einem Bi-Oxid, $SnO_2$, $TiO_2$, ZnO, $Si_3N_4$ besteht. Die Haftschicht wiederum stellt dann den Kontakt zur Glasscheibe her. Wie zuvor beschrieben, wirken die Deck- und Haftschicht in dem vorgenannten Schichtsystem als Schutzschicht der Silberschicht und als Haftvermittler zwischen Glasoberfläche und Silberschicht. Sie gewährleisten des Weiteren, dass die Silberschichten homogen aufwachsen.

Ein derartiges Schichtsystem ist sehr eingehend in Hans-Joachim Gläser, "Dünnfilmtechnologie auf Flachglas", Seiten 167-171, beschrieben. Im Bereich der Sonnenstrahlung umfasst ein Aufbau aus einem Glassubstrat, einer Haftschicht aus $TiO_2$, einer Silberschicht mit einer Dicke von 12 nm und einer Deckschicht aus $TiO_2$ eine sehr hohe Transmission im sichtbaren Lichtbereich von mehr als 80 % zwischen 420 nm und 700 nm sowie einer hohen Reflektivität > 20 % oberhalb von Wellenlängen von 900 nm und unterhalb von Wellenlängen von 420 nm.

Aufgrund dieses Transmissions- und Reflektionsverhaltens wird die erfindungsgemäße Filterwirkung für schädliche IR-Strahlung bzw. UV-Strahlung erfüllt. Wärmedämmschichten, basierend auf Silberschichtsystemen, werden als so genannte "soft-coatings" bezeichnet.

Alternativ zu Silberschichtsystemen können als Wärmedämmschichten auch so genannte "hard-coatings" verwandt werden. Unter dem Begriff "hard-coating" werden Schichtsysteme verstanden, die transparente Schichten auf der Basis von Halbleitern umfassen. Im Wesentlichen sind dies halbleitende Schichten der Materialien Indiumoxid ($In_2O_3$), Zinnoxid ($SnO_2$) und Zinkoxid (ZnO). Diese Materialien werden auch als TCOs (Transparent Conductive Oxides) bezeichnet. Derartige Schichtsysteme sind beispielsweise in Hans-Joachim Gläser "Dünnfilmtechnologie auf Flachglas", Seiten 155-164, eingehend beschrieben. Der diesbezügliche Offenbarungsgehalt wird in die Anmeldung voll umfänglich mit aufgenommen. Besondere Bedeutung als Wärmedämmschicht haben Schichten, basierend auf $SnO_2$:F erhalten. Derartige Wärmedämmschichten, basierend auf $SnO_2$:F-Schichten, werden heute mit Hilfe von CVD-Technik hergestellt. Werden derartige Schichtaufbauten, basierend auf $SnO_2$:F auf ein Glas aufgebracht, so umfasst das Schichtsystem stets eine Diffusionssperrschicht, beispielsweise aus $SiO_x$ (CH)y.

Die Wärmedämmschicht auf $SnO_2$:F-Basis weist ebenfalls eine hohe Transmission im Bereich des sichtbaren Lichtes von etwa 420 nm bis 800 nm auf und eine sehr hohe Reflektivität von beispielsweise > 20 % für Wellenlängen > als 1,8 $\mu$m.

Die "hard-coatings", umfassend beispielsweise eine $SnO_2$:F-Schicht, weisen eine hohe chemische Beständigkeit sowie eine hohe und sichere Haftung auf.

In einer weiteren Ausführungsform können die Funktionsbeschichtungen mit Filterwirkung als Interferenzbeschichtung ausgeführt sein.

Da die Transmission für Wellenlängen < 420 nm bei den erfindungsgemäßen Beschichtungen niedrig ist, können hierdurch effektiv hinter dem Glas liegende Objekte vor UV-Strahlung geschützt werden.

Bevorzugt ist die Transmission der Beschichtungen für Wellenlängen < 420 nm geringer als 50 %, bevorzugt geringer als 40 %, insbesondere geringer als 30 %. Beispiele für UV-reflektierende Beschichtungen sind beispielsweise die MIROGARD-Entspiegelung der Firma Schott-AG, die sehr wirksam als UV-A-Blocker eingesetzt werden kann. Alternativ hierzu können Interferenzschichtsysteme wie in der WO 01/46718 beschrieben aufgebaut sein, die den gefährlichen UV-B-Bereich vollständig und den UV-A-Bereich zu mehr als zwei Drittel blockieren.

Der UV-A-Bereich umfasst Wellenlängen von 380 - 315 nm, der UV-B-Bereich Wellenlängen von 315 - 280 nm.

Der sichtbare Wellenlängenbereich reicht von 380nm bis 780nm. Oberhalb von 780nm beginnt der Wellenlängenbereich der Infrarot-Strahlung (IR-Strahlung).

Ein besonders hoher Schutz, insbesondere für fotochemisch sehr empfindliche Materialien, wird dann erreicht, wenn auch die Transmission im für Wellenlängen im sichtbaren Wellenlängenbereich zwischen 380 nm und 420 nm kleiner als 50 % ist. Wird nur Strahlung im UV-B-Bereich, d.h. für Wellenlängen < 380 nm geblockt, so wird kein ausreichender Schutz für fotochemisch empfindliche Materialien erreicht.

Der Offenbarungsgehalt der WO 01/46718 wird in die vorliegende Anmeldung vollumfänglich mit aufgenommen.

Das aus der WO 01/46718 bekannt gewordene UV-reflektierende Interferenzschichtsystem weist eine hohe Transmission im sichtbaren Wellenlängenbereich zwischen 420 nm und 700 nm auf. Darüber hinaus weist ein derartiges Schichtsystem auch eine hohe Reflektivität im Infrarot-Wellenlängenbereich oberhalb 780 nm auf. Das aus der WO 01/46718 bekannte Schichtsystem ist im Wesentlichen ein Schichtsystem, aufgebaut aus Schichten mit mittlerem Brechungsindex, Schichten mit hohem Brechungsindex sowie Schichten mit niedrigem Brechungsindex. Als bevorzugte Materialien finden insbesondere die Systeme, umfassend $TiO_2$ für die hochbrechenden Schichten, $SiO_2$ für die niedrigbrechende Schichten und eine Mischung aus $TiO_2$ und $SiO_2$ für die mittelbrechende Schichten Verwendung.

Durch das zuvor beschriebene reflektierende Interferenzschichtsystem für UV-Strahlung wird im Wesentlichen die schädliche UV-Strahlung und gegebenenfalls Strahlung kurzer Wellenlängen < 420 nm im sichtbaren Wellenlängenbereich, sogenannte blauviolette Strahlung abgehalten. Um ein hinter einer Verglasung befindliches Objekt vor unerwünschter Erwärmung zu schützen, können Beschichtungen Verwendung finden, die eine hohe Reflektivität mit einer Reflektivität bevorzugt größer als 20 %, insbesondere größer als 40 %, ganz bevorzugt größer als 60 % für Wellenlängen größer als 780 nm aufweisen. Bevorzugt ist die Transmission von derartigen Beschichtungen geringer als 60 %, bevorzugt geringer als 40 %, insbesondere geringer als 20 % für Wellenlängen größer 780 nm.

Schichtsysteme, die im wesentlichen IR-Strahlung abhalten, sind insbesondere IR-reflektierende Beschichtungen, beispielsweise die zuvor beschriebenen Wärmedämm- bzw. Sonnenschutzschichten, umfassend Silber, Zinnoxid, Zinkoxid oder Indiumoxid. Betreffend derartige Wärmedämm- bzw. Sonnenschutzbeschichtungen, die IR-Strahlung reflektieren, wird auf Hans Joachim Gläser, "Dünnfilmtechnologie auf Flachglas", Verlag Karl Hofmann, 1999, Seiten 155-200 bzw. 219-228 und die WO 01/46718 verwiesen.

Anstelle der Beschichtungen, die hohe Reflektionsgrade aufweisen, wäre es auch möglich, die UV-Blockung bzw. IR-Blockung der Funktionsschichten beziehungsweise Funktionsfolien mit Hilfe von Absorption zu erreichen. Die unerwünschte Strahlung würde dann nicht zu einem hohen Anteil reflektiert, sondern von der Beschichtung bzw. der Folie absorbiert.

Bei derartigen Folien handelt es sich bevorzugt um dotierte Polyvinylbutyral (PVB)-Folie oder auch mit einer UV-Nanobeschichtung versehene Folie, beispielsweise die mit einer UV-Nanobeschichtung versehene Folie sema-SORB®-FC400 der Firma se ma Gesellschaft für Innovationen mbH, Industriestraße 12, D-06869 Coswig. Diesbezüglich wird auf die Internet-Seite www.sema-gmbh.de verwiesen, deren Offenbarungsgehalt vollumfänglich in vorliegende Anmeldung mit aufgenommen wird. Derartige Folien ermöglichen einen effektiven UV-Schutz und Schutz im Bereich kurzer Wellenlängen des sichtbaren Lichtes bis 420 nm.

Eine alternative Folie mit UV-absobierdenden und/oder reflektierenden Eigenschaften ist die Folie Saflex ® RB11 von Solutia

Dotierte PVB-Folien können neben einem effektiven Schutz für Wellenlängen < 420 nm auch einen effektiven IR-Schutz bieten. So kann die Resttransmission derartiger Folien ab Wellenlängen von 780nm um 90 % gemindert werden, ab 1200 nm um 100 %.

Generell gilt, für die Größen Reflektion, Absorption und Transmission eines Stoffes ungefähr die Beziehung

$$R+A+T \approx 1,$$

wobei

A der Absorptionsgrad,
R der Reflektionsgrad,
T der Transmissionsgrad

einer Beschichtung ist. Der spektrale Absorptionsgrad gibt beispielsweise das Verhältnis der einfallenden Strahlung zur absorbierten Strahlung bei einer bestimmten Wellenlänge an. Der Wert des Absorptionsgrades liegt zwischen 0 und 1. Ähnliches gilt für den Reflektionsgrad und den Transmissionsgrad.

Ein Nachteil von absorptiv wirkenden Schichten ist, dass es stets zu einem hohen Wärmeeintrag in die Schicht selbst beziehungsweise in die Folie kommt.

Das erfindungsgemäße Glasbauteil, umfassend wenigstens ein Glaselement aus einem herkömmlichen bzw. historischen Glas mit einer Funktionsbeschichtung und/oder einer Funktionsfolie, kann im Wesentlichen dafür verwendet werden, hinter dem Glasbauteil angeordnete Objekte vor UV-Strahlung, aber auch vor Wärmestrahlung, das heißt IR-Strahlung, zu schützen. Eingesetzt werden kann das Glasbauteil für Gläser für gestalterische Zwecke, für Gläser für Fenster in historischen Objekten, für Gläser in Glasfassaden oder als Fassadenelemente und für Gläser zum Schutz von Wandmalereien. Durch die Verwendung von wenigstens einem herkömmlichen bzw. historischen Glas, wie Schleuderglas, Zylinderglas, Ziehglas, Gussglas, geblasenem Glas oder einem Glas mit einer ähnlichen Struktur, kann dem Glasbauteil aufgrund der unregelmäßigen Oberfläche ein historisches Aussehen vermittelt werden zu den herkömmlichen bzw. historischen Gläsern zählen auch sogenannte Restaurierungsgläser. Restaurierungsgläser sind hochtransparente Flachgläser, deren (leicht) unregelmäßige Oberflächenstruktur altem Fensterglas nachempfunden ist. Restaurierungsgläser verleihen historischen Gebäuden wieder den alten Glanz, ohne dabei auf die Vorteile einer modernen Verarbeitung verzichten zu müssen. Im Gegensatz zu Floatglas, das durch seinen harten Spiegeleffekt den ästhetischen Eindruck der historischen Fenster zum Teil stört, sind gezogene Restaurierungsgläser mit ihren typischen Strukturen optimal auf die historischen Fenster und die Lichtverhältnisse abgestimmt.

Restaurierungsgläser können maschinengezogen sein und wie herkömmliches Glas bearbeitet werden. Restaurierungsgläser können sowohl zu Isolierglas als auch zu Verbundsicherheitsglas (VSG) verarbeitet werden. Ab einer Dicke von 4 mm können sie auch als Einscheibensicherheitsglas (ESG) eingesetzt werden. Restaurierungsgläser der Schott AG, Hüttenstraße 1, 31073 Grünenplan sind die Gläser "GOETHEGLAS", RESTOVER" und "TIKANA"

"GOETHEGLAS" der Schott AG eignet sich mit seiner unregelmäßigen Oberfläche nicht nur zur Restaurierung historischer Fensterverglasungen, sondern auch zu Außenschutzverglasung. Wertvolle Bleiverglasungen werden mit Goetheglas vor schädlichen Umwelt- und Witterungseinflüssen geschützt. Aufgrund der Verfügbarkeit stärkerer Glasdicken kann Goetheglas auch einen wirksamen Beitrag zur Stabilisierung der zu restaurierenden Fensterflügel leisten.

"RESTOVER" der Schott AG ähnelt mit seiner unregelmäßigen Oberflächenstruktur einem um die Jahrhundertwende gefertigten Fensterglas und passt sich der historischen Fassade des Gebäudes hervorragend an. Aufgrund seiner geringen Dicken kann dieses Glas problemlos in historische Fensterrahmen eingebaut werden.

"TIKANA" der Schott AG wurde speziell für Gebäude im Bauhausstil entwickelt. Das Glas wird den Ansprüchen an die Funktionalität ebenso gerecht wie an den ästhetischen Eindruck, den das Bauwerk vermittelt. Da es altem Fensterglas nachempfunden ist, fügt sich TIKANA harmonisch in das Gesamtbild des Gebäudes ein. Seine Oberfläche ist leicht unregelmäßig.

Durch das UV-Filter in Form einer Beschichtung oder einer Folie wird das hinter der Verglasung liegende Objekt vor Zerstörung geschützt, insbesondere vor Vergilbung durch UV-Strahlung. Der IR-Filter bietet einen Schutz vor zu starker Erwärmung und damit einer Schädigung der hinter der Verglasung liegenden Objekte. Wie zuvor beschrieben, kann das historische Glas selbst mit der Funktionsbeschichtung oder der Funktionsfolie, die den UV-Filter beziehungsweise den IR-Filter zur Verfügung stellt, ausgerüstet sein. Eine weitere Möglichkeit ist die Ausbildung eines Verbundsicherheitsglases, bestehend aus historischem Glas, insbesondere in Form von Restaurierungsgläsern, die über eine Verbindungsfolie beziehungsweise ein Verbindungsmittel mit einem Floatglas, das die Funktionsbeschichtung oder Funktionsfolie trägt, verbunden ist. Als Verbindungsfolie kommt beispielsweise eine PVB-Folie in Betracht. Eine andere Möglichkeit wäre ein Gießharz als Verbindungsmittel. Besonders bevorzugt sind dotierte PVB-Folien oder Spezialfolien mit hohem UV-Schutz und geringer Resttransmission im IR-Wellenlängenbereich.

Das Verbundsicherheitsglas kann zusammen mit einem weiteren Glaselement zu einem Isolierglasverbund erweitert werden, wobei entweder eine Scheibe des Verbundsicherheitsglases die Funktionsbeschichtung trägt oder aber das dritte Glaselement des Isolierglasverbundes. Alternativ kann selbstverständlich die Funktionsbeschichtung beziehungsweise die Funktionsfolie in einem Isolierglasverbund auch auf das dritte Glas aufgebracht werden. In einer letzten Möglichkeit wird die Funktionsbeschichtung in die Folie beziehungsweise das Verbindungsmittel des Verbundsicherheitsglases eingebracht, beispielsweise mit Hilfe einer Dotierung.

Die Erfindung soll nachfolgend ohne Beschränkung anhand der Ausführungsbeispiele beschrieben werden.

Es zeigen:

Fig. 1 eine Glasscheibe, bestehend aus einem historischen Glas mit einer Funktionsbeschichtung.

Fig. 2a ein Verbundsicherheitsglaselement, bestehend aus einer historischen Glasscheibe und einer zweiten Glasscheibe mit einer Funktionsbeschichtung.

Fig. 2b ein Verbundsicherheitsglaselement, bestehend aus einer historischen Glasscheibe und einer zweiten Glasscheibe sowie einer zwischen den Scheiben liegenden Folie, die auch als UV-Schutz dient.

Fig. 3a ein Isolierglasverbund umfassend ein historisches Glas und ein Floatglas

Fig. 3b     ein Isolierglasverbund umfassend ein Verbundsicherheitsglas an der Innenseite des Isolierglaselementes

Fig. 3c     einen Isolierglasverbund, umfassend ein Verbundsicherheitsglas und ein drittes Glaselement.

Fig. 3d     ein Isolierglasverbund umfassend ein historisches Glas und ein Floatglas, wobei das Verbundglas an der Aussenseite angeordnet ist.

Fig. 4     ein Verbundsicherheitsglas und ein drittes Glaselement, ergebend einen Isolierglasverbund mit Funktionsbeschichtung auf dem Verbundsicherheitsglas.

Fig. 5     ein Verbundsicherheitsglas mit einer Folie, die als Funktionsfolie zur UV- bzw. IR-Filterung ausgebildet ist.

Fig. 6a     ein Reflektionsverhalten einer beispielhaften Funktionsbeschichtung, aufgebaut als Interferenzbeschichtung.

Fig. 6b     ein Reflektionsverhalten einer beispielhaften Funktionsbeschichtung, aufgebaut als Wärmedämmbeschichtung, umfassend eine Silberschicht.

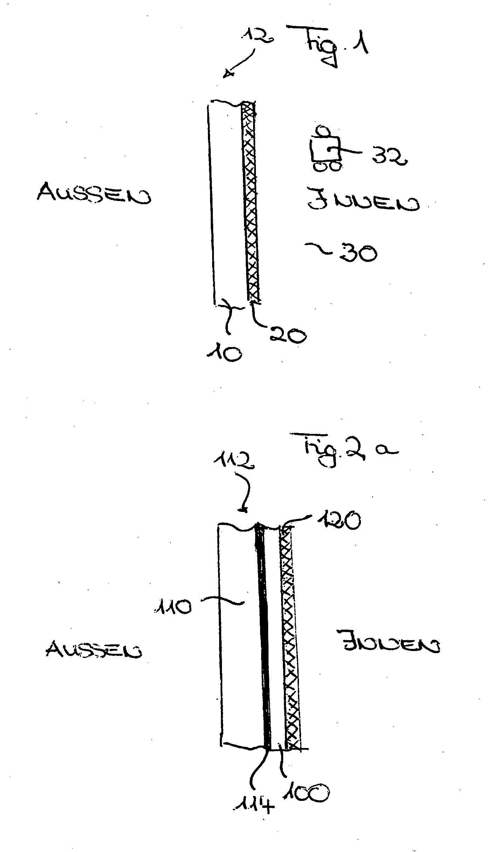

In Figur 1 ist ein erstes Ausführungsbeispiel der Erfindung dargestellt. Bei dem ersten Ausführungsbeispiel der Erfindung ist das historische Glas 10, das ein herkömmliches Glas, wie Schleuderglas, Zylinderglas, Ziehglas, Gussglas, geblasenes Glas oder Glas mit einer ähnlichen Struktur sein kann, mit einer Funktionsschicht 20 beschichtet. Historisches Glas 10 und die Funktionsschicht 20 bilden vorliegend das Glasbauteil 12 aus. Das Glasbauteil 12 ist damit ein Einscheibenglas. Die Funktionsschicht 20 weist eine Filterwirkung und/oder eine Absorption für elektromagnetische Strahlung im UV-Wellenlängenbereich und/oder im IR-Wellenlängenbereich auf. Eine derartige Funktionsschicht kann beispielsweise eine Wärmedämm- bzw. Sonnenschutzbeschichtung oder eine Beschichtung sein, wie sie aus der WO 01/46718 bekannt geworden ist.

Die aus der WO 01/46718 bekannt gewordene Beschichtung umfasst wenigstens vier Einzelschichten, wobei aufeinanderfolgende Schichten unterschiedliche Brechungsindizes aufweisen und die Einzelschichten UV- und temperaturstabile anorganische Materialien sind. Besonders bevorzugt umfasst das Interferenzschichtsystem mindestens fünf Einzelschichten mit folgendem Schichtaufbau:

Substrat / M1 / T1 / M2 / T2 / S, wobei

-     das Substrat das transparente Substrat, hier das historische Glas 10 bezeichnet,

-     M1, M2 eine Schicht mit mittlerem Brechungsindex

-     T1, T2 eine Schicht mit hohem Brechungsindex und

-     S eine Schicht mit niedrigem Brechungsindex.

Bevorzugt liegen die Brechungsindizes bei einer Referenzwellenlänge von 550 nm für die Schichten mit niedrigem Brechungsindex unterhalb von 1,5, für die mittelbrechenden Schichten im Bereich zwischen 1,6 und 1,8 und für die hochbrechenden Schichten größer 1,9. In einer besonders bevorzugten Ausführungsform liegen die Schichtdicken der Schicht M1 zwischen 70 und 100 nm, die Schichtdicken T1 zwischen 30 und 70 nm, die Schichtdicken der Schicht M2 zwischen 20 und 40 nm, die Schichtdicken der Schicht T2 zwischen 30 und 50 nm und die Schichtdicken der Schicht S zwischen 90 und 110 nm. Als bevorzugte Materialien kommen für die hochbrechende Schicht $TiO_2$, für die niedrigbrechende Schicht $SiO_2$ und für die mittelbrechende Schicht eine Mischung aus $TiO_2$ und $SiO_2$ zur Verwendung. Die hochbrechenden Einzelschichten können aber auch $Nb_2O_5$, $Ta_2O_5$, $CeO_2$, $HfO_2$ sowie Mischungen dieser Materialien und $TiO_2$ umfassen. Die niedrigbrechenden Schichten können $MgF_2$ oder Mischungen von $MgF_2$ mit $SiO_2$ umfassen. Die mittelbrechenden Schichten können in einer alternativen Ausgestaltung $Al_2O_3$, $ZrO_2$ umfassen.

Das zuvor beispielhaft beschriebene Interferenzschichtsystem zeichnet sich dadurch aus, dass es sowohl im UV-Bereich bzw. blauvioletten Wellenlängenbereich unterhalb von 420 nm und oberhalb von 700 nm ein hohes Reflektionsvermögen aufweist.

Da gleichzeitig die Absorption für Strahlung < 420 nm und für Strahlung > 700 nm sehr niedrig ist, transmittiert das Interferenzschichtsystem gemäß der WO 01/46718 nur einen geringen Anteil des einfallenden Lichtes. Aufgrund der hohen Reflektivität im Wellenlängenbereich < 420 nm und Wellenlängenbereich > 700 nm bietet das in der WO 01/46718 beschriebene Interferenzschichtsystem einen hohen Schutz eines im Halbraum 30 hinter dem Glaselement 12 angeordneten Objektes 32 vor schädlicher UV- bzw. IR-Strahlung. Das Licht trifft auf von der Außenseite auf das Objekt, welches auf der Innenseite des Glaselementes 12 liegt. Die Außenseite des Glaselementes 12, die dem einfallenden Licht, beispielsweise dem Sonnenlicht ausgesetzt ist, ist vorliegend mit AUSSEN bezeichnet, die Innenseite mit INNEN.

In einer alternativen Ausgestaltung der Erfindung ist vorgesehen, dass die Beschichtung eine Wärmedämmbeschichtung ist, wie sie beispielsweise in Hans Joachim Gläser, "Dünnfilmtechnologie auf Flachglas", Karl Hofmann Verlag, 1999, Seiten 155-200, offenbart ist. Eine derartige Wärmedämmbeschichtung kann beispielsweise ein sogenanntes "soft-coating" oder ein "hard-coating" sein. Bei einem "soft-coating" handelt es sich um eine Beschichtung, die eine Silberschicht umfasst, die zwischen eine Deck- und eine Haftschicht eingeschlossen ist, um sie vor Umwelteinflüssen zu schützen. Die Deck- bzw. Haftschicht kann beispielsweise ein Bi-Oxid, $SnO_2$, $TiO_2$, ZnO oder $Si_3N_4$ sein. Zwischen Deck- und Silberschicht bzw. Silber- und Haftschicht werden Blockierschichten eingebracht, die beispielsweise aus NiCr bzw. teiloxidischem Al, Ti, Zn oder Pb bestehen können. Die Haftschicht vermittelt eine ausreichende Haftung der Beschichtung auf einem Glasträger. Bei "hard-coatings" handelt es sich um Beschichtungen auf Basis von Halbleitermaterialien, wie beispielsweise Indiumoxid, Zinnoxid und Zinkoxid. Besonders bevorzugt sind Beschichtungen aus $SnO_2$:F, die auf einen Glasträger aufgebracht werden, wobei zwischen der $SnO_2$:F-Schicht und dem Glasträger eine Diffusions- bzw. Sperrschicht, bestehend aus $SiO_x$ (CH)y eingebracht wird.

Bei dem in Figur 1 dargestellten Glaselement ist nur die Innenseite des historischen Glases 10 mit einer Funktionsschicht beschichtet. Dies ist nicht notwendig so, möglich wäre auch eine beidseitige Beschichtung des historischen Glases 10 mit einer Funktionsschicht. Des Weiteren ist das Glaselement vorliegend als eine Glasscheibe dargestellt. Dies ist nur eine bevorzugte Ausgestaltung und keineswegs eine notwendige. Selbstverständlich könnte das historische Glas auch eine von einer Scheibe abweichende Kontur aufweisen, beispielsweise eine gebogene, ohne, dass vom Gedanken der Erfindung abgewichen wird.

Anstelle der Beschichtung 20, die auf das herkömmliche Glas 10, das ein Schleuderglas, Zylinderglas, Ziehglas oder Gussglas sein kann, wie zuvor beschrieben aufgebracht wird, kann eine Folie vorgesehen sein, die eine Filterwirkung und/oder eine Absorption für elektromagnetische Strahlung mit Wellenlängen kleiner 380 nm, insbesondere kleiner 420 nm zeigt. Die Folie zeigt nicht nur eine niedrige Transmission im Wellenlängenbereich zwischen 280 nm und 380 nm wie beispielsweise PVB-Folien, sondern auch im Wellenlängenbereich zwischen 380 nm und 420 nm. Bevorzugt ist die Transmission der Folie für Wellenlängen zwischen 280 nm und 420 nm kleiner 20%, ganz bevorzugt kleiner 15%, insbesondere kleiner 10%. Insbesondere steigt die Transmission der Folie im Gegensatz zu PVB-Folien auch zwischen 380 nm und 420 nm nicht wesentlich an und liegt bevorzugt unterhalb von 20%, besonders bevorzugt unterhalb von 15%, insbesondere unterhalb von 10%.

Figur 2a zeigt eine alternative Ausgestaltung der Erfindung. In Figur 2a dargestellt ist ein Verbundglas 112 bestehend aus einem historischen Glas 110 und einem Floatglas 100, das mit dem historische Glas 110 mittels eines Verbindungsmittels, beispielsweise Gießharz oder einer Folie 114, verbunden ist. Das Verbundglaselement 112 enthält ebenfalls eine Funktionsbeschichtung 120, die UV-Strahlung und/oder IR-Strahlung filtert beziehungsweise absorbiert. Diese ist in der Ausführungsform gemäß Figur 2a auf das Floatglas 100 aufgebracht. Aufgebaut ist die Funktionsschicht 120 wie die direkt auf das historische Glas aufgebrachte Funktionsschicht gemäß Figur 1. Bezüglich einer derartigen als Interferenzschichtsystem ausgebildeten Funktionsbeschichtung wird auf die Ausführungen betreffend Figur 1 verwiesen. Wie dort ausgeführt, können die Funktionsbeschichtungen, beispielsweise Interferenzbeschichtungen, Wärmedämmbeschichtungen oder auch Sonnenschutzbeschichtungen sein. Die Funktionsbeschichtung 120 ist wieder innenseitig aufgebracht. Das historische Glas kann ein Schleuderglas, ein Zylinderglas, ein Ziehglas, ein Gussglas, ein geblasenes Glas oder ein Glas mit ähnlicher Struktur sein. Derartige Gläser sind beispielsweise Restaurierungsgläser der Schott AG, Hüttenstrasse 1, 31073 Grünenplan, wie das Restaurierungsglas Goetheglas", "RESTOVER®", "RESTOVER Light" oder "TIKANA".

Die Dicke des gesamten Verbandes beträgt zwischen 6 mm und 20 mm, bevorzugt zwischen 6 mm und 10 mm, ganz bevorzugt 8 mm. Die Dicke der einzelnen Scheiben beträgt dann ohne Beschränkung hierauf bei einem 8 mm-Verbund je 4 mm.

Betreffend Sonnenschutzschichten wird auf Hans Joachim Gläser "Dünnfilmtechnologie auf Flachglas", Karl Hofmann Verlag, 1999, Seiten 219 bis 227, dessen Offenbarungsgehalt voll umfänglich in die Anmeldung mit aufgenommen wird, verwiesen.

Sonnenschutzschichten können als nicht selektive Metalloxidschichten auf der Basis von Fe/Cr/Ni-Oxiden und/oder ein- und beidseitig aufgebrachten Ti-Dioxiden aufgebaut sein. Bei den nicht selektiven Metallschichtsystem beruhen die Sonnenschutzwirkungen im Wesentlichen auf Absorption und Reflektion der Metallschichten.

Alternativ können selektive Sonnenschutzschichten vornehmlich auf der Basis von Silber eingesetzt werden, wobei sich derartige Sonnenschutzschichten durch eine hohe Reflektion im nahen Infrarot-Bereich in Folge der hohen Konzentration der freien Elektronen auszeichnen. Die Silberschichten müssen gegenüber Umwelteinflüssen durch Deckschichten gesichert werden. Alternativ zu Sonnenschutzschichten auf Basis von Silber können derartige selektive Sonnenschutzschichten auch auf der Basis von Gold mit einer Dicke von 10 bis 20 nm hergestellt werden.

Bei einer Ausgestaltung der Sonnenschutzschicht auf Basis von Silber wird gleichzeitig auch noch eine Wärmedämmfunktion erreicht.

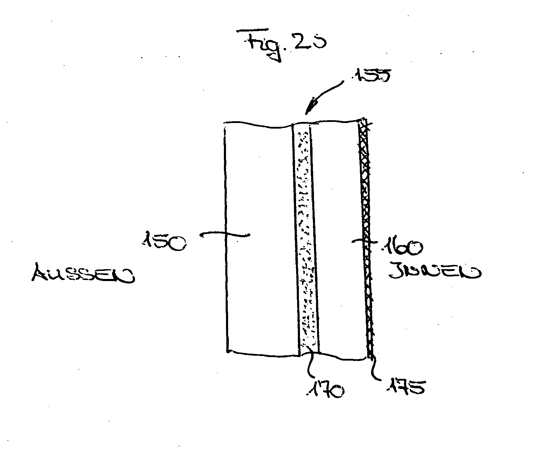

In Figur 2b ist eine alternative Ausgestaltung einer Verbundglasscheibe 155 gezeigt. Bei der alternativen Ausgestaltung wird die Filterwirkung und/oder Absorptionswirkung für die UV-Strahlung mit Wellenlängen kleiner 420 nm, insbesondere im Bereich von 280 nm bis 420 nm durch eine zwischen die Scheiben 150, 160 eingebrachte Folie 170 zur Verfügung gestellt. Bei der Scheibe 150 handelt es sich um ein historisches Glas, wie beispielsweise ein Restaurierungsglas. Bei der Scheibe 170 kann es sich um ein herkömmliches Floatglas handeln oder auch um ein Restaurierungsglas. Bei Verwendung einer PVB-Folie, wie sie in herkömmlichen Verbundgläsern eingesetzt wird, beträgt die Transmission im blauvioletten Bereich des sichtbaren Lichtes von 380 nm bis 420 nm, durch den gesamten Verbund in Mittel mehr als 55%. Strahlung im kurzwelligen Bereich - die so genannte UV-Strahlung zwischen 280 nm bis 380 nm - schädigt massiv historische Substanz und Konservierungsmaterialien. Darüber hinaus ist aber auch im blauvioletten Bereich des sichtbaren Lichts - zwischen 380 nm und 420 nm - eine signifikante Schädigung organischer Materielien zu erkennen. So bleichen beispielsweise die Pigmente aus, Lackschichten werden rissig und Bindemittel zerstört. Konservierungsmittel können gelbstichig werden.

Daher ist es besonders vorteilhaft, wenn Spezialfolien anstelle der PVB-Folie verwandt werden, die auch im blauvioletten Bereich ein großen Anteil der Strahlung absorbieren bzw. reflektieren. Wird eine derartige Spezialfolie 170 als Verbundglasfolie eingesetzt, so ist die Transmission im gesamten Wellenlängenbereich von 280 nm bis 420 nm kleiner 20%, insbesondere kleiner 10%, ganz bevorzugt kleiner 8%.

An der Innenseite des Verbundes 155 können weitere Funktionsschichten, beispielsweise wie zuvor beschrieben Schichtsysteme, die die Transmission von IR-Strahlung mit Wellenlängen größer 780 nm abhalten, beispielsweise Schichtsysteme umfassend Silber, Zinnoxid oder Indiumoxid sein.

Selbstverständlich kann das Floatglas auch AUSSEN und das historische Glas INNEN angeordnet sein. Die Daten für ein Verbundglassystem bei dem ein Glas insbesondere ein historisches Glas, beispielsweise das Glas "TIKANA" und ein Glas, ein Floatglas mit dazwischenliegender PVB-Folie ausgebildet wird und im Vergleich hierzu mit einer Spezialfolie ist in Tabelle 1 angegeben. Hierin bezeichnet K den K-Wert in $W/m^2K$, $T_{UV}$ die Transmission im UV-Bereich bis 380 nm, $T_{380nm-420nm}$ die Transmission im Wellenlängenbereich 380 nm - 420 nm und $T_V$ die Transmission im sichtbaren Bereich

| Scheibentyp | K in $W/m^2K$ | $T_{UV}$ | $T_{380nm-420nm}$ | | $T_V$ | G | Ra |
|---|---|---|---|---|---|---|---|
| TIKANA | 5,8 | 0,78 | 0,91 | 91% | 0,91 | 0,91 | 100 |
| TIKANA PVB Standard Float Standard Gesamtdicke des Aufbaus ca. 8mm | 5,6 | <0,01 | 0,57 | 57% | 0,9 | 0,83 | 99 |
| TIKANA Spezialfolie mit UV-Schutz Float Standar, Gesamtdicke des Aufbaus ca. 8mm | 5,6 | <0,01 | 0,08 | 8% | 0,89 | 0,80 | 98 |

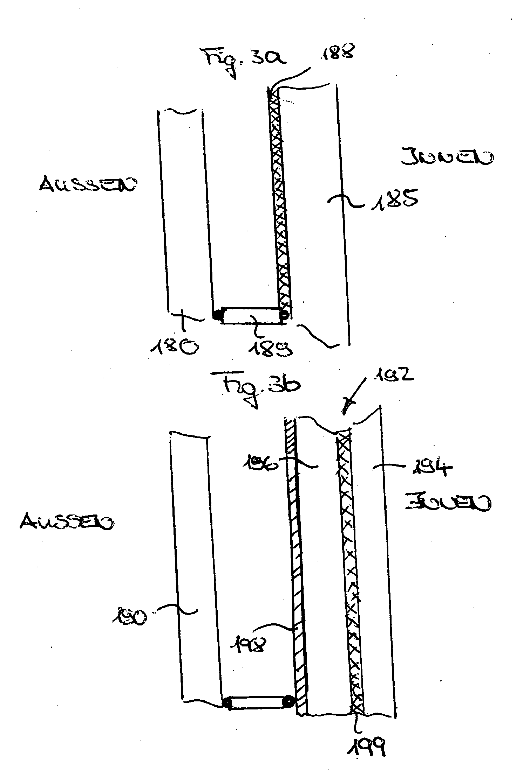

In Figur 3a ist ein Isolierglasverbund aus einer historischen Glasscheibe 180, beispielsweise einer Scheibe "TIKANA" und einer Floatglasscheibe 185 gezeigt, Auf die Floatglasscheibe ist eine Funktionsbeschichtung 188 oder eine Funktionsfolie aufgebracht. Die beiden Glasscheiben 180, 185 des Isolierglasverbundes werden durch einen Abstandshalter 189, beispielsweise ein Metallstück voneinander beabstandet. Der Abstand zwischen den Scheiben beträgt zwischen 4mm und 50mm. Der Zwischenraum zwischen den Scheiben ist mit einem Edelgas Glas, beispielsweise Argon befüllt.

In einer ersten Ausgestaltung der Erfindung ist die Funktionsbeschichtung eine Wärmedämmbeschichtung, aufbauend auf einem Silberschichtsystem. Die Daten für einen Isolierglasverbund, bei dem die Funktionsbeschichtung eine Wärmedämmbeschichtung ist, ist in Tabelle 2 angegeben:

Tabelle 2:

| Scheibentyp | K in $W/m^2K$ | $T_{UV}$ | $T_V$ | G | Ra |
|---|---|---|---|---|---|
| **TIKANA Float Standard mit Wärmedämmschicht (4/4/4), Gesamtdicke des Aufbaus ca. 12mm** | 1,9 | 0,26 | 0,8 | 0,64 | 98 |
| **TIKANA Float Standard mit Wärmedämmschicht (4/16/4) Gesamtdicke des Aufbaus ca. 24mm** | 1,1 | 0,26 | 0,8 | 0,65 | 98 |

Alternativ zu einer Wärmedämmschicht könnte die Funktionsschicht 188 bzw. die Funktionsfolie auch eine Sonnenschutzschicht sein. Für ein derartiges System sind in Tabelle 3 die Werte angegeben.

Tabelle 3:

| Scheibentyp | K in W/m$^2$K | T$_{UV}$ | T$_V$ | G | Ra |
|---|---|---|---|---|---|
| TIKANA mit Sonnenschutzschicht Floatglas (4/4/4), Gesamtdicke des Aufbaus ca. 12mm | 1,9 | 0,17 | 0,73 | 0,45 | 96 |
| TIKANA mit Sonnenschutzschicht, Floatglas (4/16/4), Gesamtdicke des Aufbaus ca. 24mm | 1,1 | 0,17 | 0,73 | 0,45 | 96 |

Figur 3b zeigt ein Isolierglasverbund, bei dem eine Scheibe als Verbundglas ausgestaltet ist. Der Isolierglasverbund umfasst eine historische Glasscheibe, die Glasscheibe 190, die beipielsweise eine Scheibe TIKANA sein kann und eine Verbundglasscheibe 192, die vorliegend aus zwei Scheiben zusammengesetzt ist, einer historischen Scheibe 194 und einer Floatglasscheibe 196, wobei die Floatglasscheibe mit einer Funktionsschicht versehen sein kann. Die Funktionsschicht 198 ist in dem dargestellten Ausführungsbeispiel eine Sonnenschutzschicht, die an der Seite der Scheibe angeordnet ist, die zum Zwischenraum des Isolierglasverbundes weist. Die beiden Scheiben 194, 196 der Verbundglasscheibe sind mittels PVB-Folie 199 verbunden. In vorliegendem Ausführungsbeispiel ist die Verbundglasscheibe 192 an der Innenseite INNEN angeordnet. In Tabelle 4 sind die Werte für ein derartiges System angegeben.

Tabelle 4:

| Scheibentyp | K in W/m$^2$K | T$_{UV}$ | T$_V$ | G | Ra |
|---|---|---|---|---|---|
| TIKANA mit Sonnenschutzschicht VG (Float Standard / PVB 0,76mm / TIKANA) (4/16(/8), Gesamtdicke des Aufbaus ca. 28mm | 1,1 | <0,01 | 0,74 | 0,45 | 97 |
| TIKANA mit Sonnenschutzschicht VG (Float Standard / Folie mit UV-Schutz / TIKANA) (4/16/8), Gesamtdicke des Aufbaus ca. 28mm | 1,1 | <0,01 | 0,73 | 0,45 | 96 |

In Tabelle 4 ist sowohl ein Verbundglas angegeben, bei dem die Folie zwischen den Scheiben 194, 196 eine PVB-Folie sein kann. In einem solchen Fall erfolgt im wesentlichen eine Blockung der UV-Strahlung im Wellenlängenbereich von 280nm bis 380nm. Anstelle der PVB-Folie wäre es aber auch möglich, eine Spezialfolie, d. h. eine Folie mit UV-Schutz zu verwenden, die auch die Transmission von violettem Licht im Wellenlängenbereich von 380nm bis 420nm verringert.

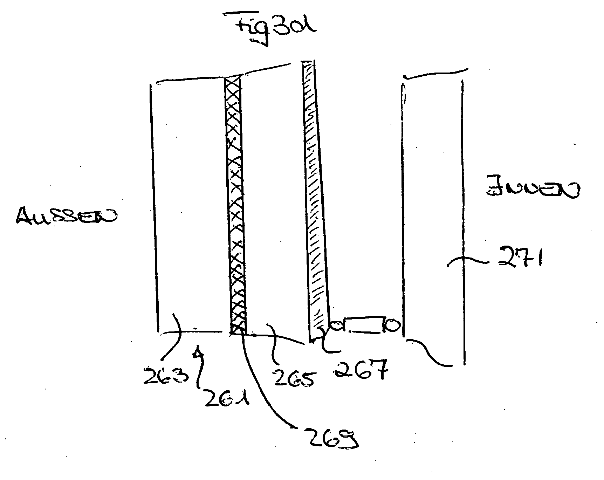

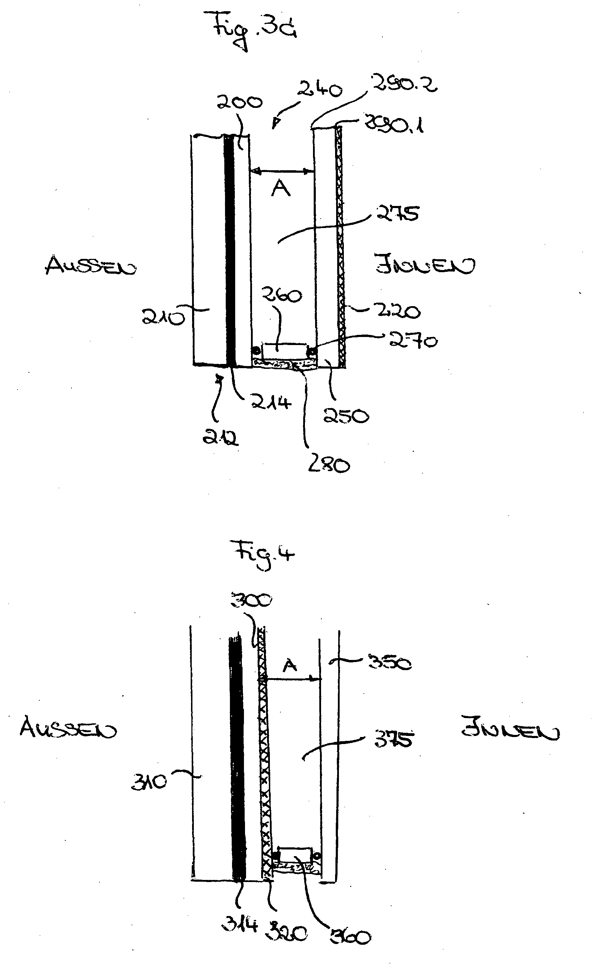

In Figur 3c ist ein Ausschnitt eines Isolierglasverbundes 240 aufgebaut aus einem Verbundelement 212 gemäß Figur 2 und einem dritten Glaselement 250 gezeigt. Der Abstand des Isolierglasverbundes wird durch ein Metallstück 260, bevorzugt Aluminium, erhalten. Der Abstand A zwischen der Innenfläche des Verbundelementes und der Innenfläche des dritten Glaselementes liegt im Bereich von 5 mm bis 50 mm, bevorzugt im Bereich 10 mm bis 30 mm, insbesondere bei 16 mm. Üblicherweise wird im Innern des Metallstücks noch ein Trockenmittel eingefügt (nicht gezeigt), das die dauerhafte Entfernung von Wasser aus dem gasgefüllten Innenraum 275 gewährleistet. Um das Abstandsstück 260 gegenüber den jeweils scheibenförmigen Elementen 212, 250 abzudichten, ist ein Dichtmaterial, beispielsweise ein O-Ring 270 vorgesehen, das vorzugsweise aus einem Butylkautschuk besteht. Eine vollständige Abdichtung des Zwischenraums zwischen dem Verbundglaselement 212 und dem dritten Glaselement 250 wird durch unterhalb des Abstandselementes aufgebrachten Butylkautschuk 280 erreicht. Zwischen dem Verbundglaselement und dem dritten Glaselement befindet sich bevorzugt ein gasförmiges Medium. Bei erhöhten thermischen Anforderungen wird hier insbesondere ein Edelgasmedium eingesetzt. Das Edelgasmedium kann beispielsweise die Elemente Argon oder Xenon oder Krypton umfassen. Die Funktionsschicht 220, die für eine Filterwirkung und/oder eine Absorption für Wellenlängenbereich < 420 nm, insbesondere im Bereich 280nm bis 420nm und/oder im IR-Wellenlängenbereich > 780 nm sorgt, ist bei der Ausführungsform gemäß Figur 3 auf die Innenseite 290.1 des dritten Glaselementes 250, das bevorzugt als Floatglas ausgebildet ist, aufgebracht. Genauso könnte diese Beschichtung auch auf die zur Außenseite AUSSEN gewandten Seite 290.2 oder auf beide Seiten des dritten Glaselementes aufgebracht sein. Bei der Beschichtung handelt es sich beispielsweise um eine Interferenzbeschichtung wie in der WO 01/467 18 dargestellt oder um Wärmedämmschichten oder um Sonnenschutzschichten, wie zuvor beschrieben.

Eine der beiden Scheiben 200, 210 des Verbundglaselementes kann ein historisches Glas, wie beispielsweise ein Schleuderglas, ein Zylinderglas, ein Ziehglas, ein Gussglas, ein geblasenes Glas oder ein Glas mit ähnlicher Struktur sein. Die Verbundschicht 214 zwischen den Scheiben 200, 210 ist vorliegend eine gebräuchliche PVB-Folie. Anstelle der PVB-Folie, die im wesentlichen die Transmission von UV-Strahlung im Wellenlängenbereich von 280nm bis 380nm verbindet, könnte auch eine Spezialfolie vorgesehen sein, die auch die Transmission von schädlicher blauvioletter Strahlung im Wellenlängenbereich von 380nm bis 420nm verbindet.

Ein Isolierglassystem mit einer derartigen zwischen zwei Scheiben eines Verbundglases eingebrachten Spezialfolie zeigt Fig. 3d.

In Fig. 3d ist das das Verbundglas 261 wie bei der Ausführungsform gemäß Fig. 3c im Isolierglasverbund außen (AUSSEN) angeordnet. Das Verbundglas 261 umfasst eine Scheibe 263 aus historischem Glas, z. B. das Glas "TIKANA" und eine Scheibe des Floatglas 265. Das Floatglas 265 kann mit einer Funktionsbeschichtung 267, vorliegend einer Wärmeschutzschicht versehen sein. An der Innenseite (INNEN) umfasst die Isolierglasanordnung eine Floatglasscheibe 271, wie schon bei der Ausführungsform gemäß Figur 3b kann die Folie 269 im Verbundglas 261 als PVB-Folie, die im wesentlichen die Transmission im UV-Bereich von 280nm bis 380nm reduziert oder als Spezialfolie, die auch noch die Transmission im blauvioletten Bereich von 380nm bis 420nm verringert ausgebildet sein. Die wichtigsten Daten können aus Tabelle 5 entnommen werden.

Tabelle 5:

| Scheibentyp | K in W/m2K | TUV | TV | g | Ra |
|---|---|---|---|---|---|
| VG (TIKANA / PVB Standard 0,76mm /Float Standard) Float Standard Wärmedämmschicht (8/16/4), Gesamtdicke des Aufbaus ca. 28mm | 1,1 | <0,01 | 0,79 | 0,59 | 98 |
| VG (TIKANA / Folie mit UV-Schutz 0,76mm /Float Standard) Float Standard Wärmedämmschicht (8/16/4), Gesamtdicke des Aufbaus ca. 28mm | 1,1 | <0,01 | 0,78 | 0,56 | 96 |

Bei der Ausführungsform gemäß Figur 4 handelt es sich ebenfalls um einen Isolierglasverbund der aufgebaut ist wie in Figur 3. Gleiche Bauteile werden mit denselben Bezugsziffern erhöht um 300 gekennzeichnet. Im Unterschied zur Ausführungsform gemäß Figur 3 ist jedoch die Funktionsbeschichtung 320 auf die ins Innere gerichtete Seite 392 des Verbundglaselementes aufgebracht.

Anstelle einer Funktionsbeschichtung kann die Filterwirkung auch in die Folie beispielsweise durch absorbierende Elemente eingebracht werden. Eine solche Folie kann anstelle der Beschichtung bei den Ausführungsformen gemäß den Figuren 1 bis 4 aufgebracht werden.

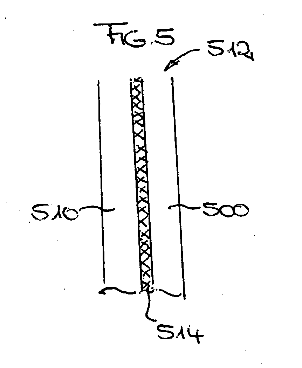

In Figur 5 wird ein Verbundelement 512, bestehend aus einem historischen Glas 510 und einem Floatglas 500 dargestellt, das mit Hilfe einer Verbindungsfolie 514 verbunden ist. Die Verbindungsfolie 514 selbst enthält absorbierende Elemente, die eine Absorption von UV-Strahlung beziehungsweise IR-Strahlung aufweisen mit einem hohen Absorptionsgrad für Strahlung mit Wellenlängen kleiner 420 nm und/oder Wellenlängen länger als 780 nm. Während also die schädliche UV-Strahlung im Bereich 280nm bis 380nm, die blauviolette Strahlung im Bereich 380nm bis 420nm und die IR-Strahlung mit Wellenlängen oberhalb 780nm geblockt werden, ist die Transmission im Wellenlängenbereich von 420nm bis 780nm hoch. Hierdurch wird die Filterwirkung im UV-Wellenlängenbereich und/oder im IR-Wellenlängenbereich erzeugt. Gleiche Bauteile wie in Figur 2 sind mit einer um 400 höheren Bezugsziffer bezeichnet. Bei der Ausführungsform gemäß Figur 5 wirkt die Verbindungsfolie 514 selbst als Filter für die kurzwellige UV- und die langwellige IR-Strahlung. Als Verbindungsfolie 514 kann eine dotierte PVB-Folie oder eine mit einer UV-Nanobeschichtung versehene Folie verwandt werden.

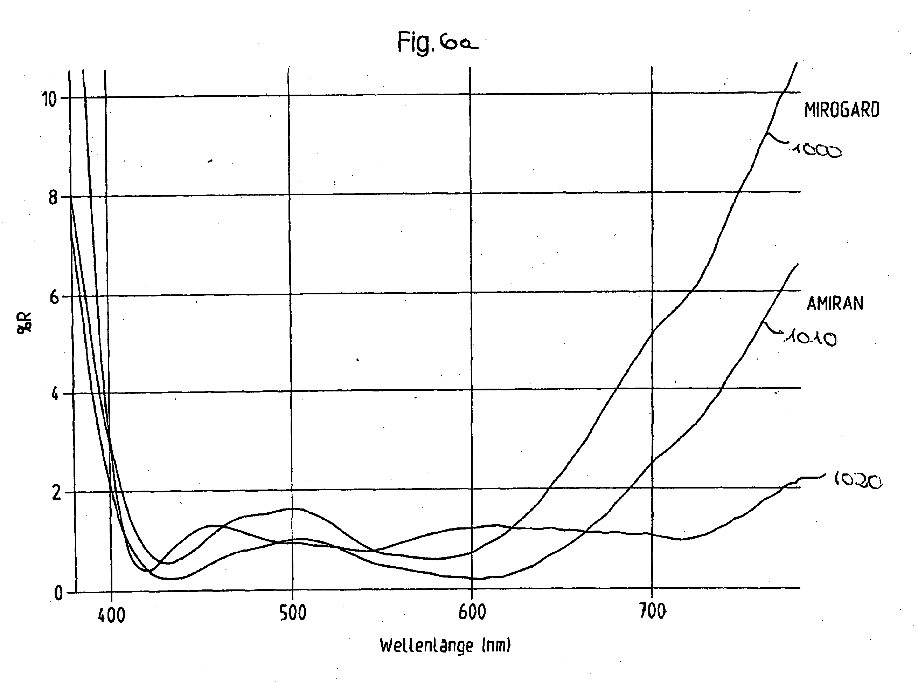

Figur 6a schließlich zeigt beispielhaft das Reflektionsverhalten von Interferenzbeschichtungen, wie sie aus der WO 01/46718 bekannt geworden sind. Sämtliche in Figur 6a dargestellten Beschichtungen weisen eine Reflektionscharakteristik auf, die eine hohe Reflektion für Strahlung < 400 nm und für Strahlung > 700 nm im zeigt. Im sichtbaren Wellenlängenbereich von ca. 420 - 680 nm wird hingegen eine hohe Transmission erreicht. Aufgetragen ist die Reflektivität in % über der Wellenlänge. Die Bezugsziffer 1000 bezeichnet ein Interferenzschichtsystem MIROGARD, die Bezugsziffer 1010 ein Interferenzschichtsystem AMIRAN und die Bezugsziffer 1020 eine im wesentlichen UV-Licht blockierende Beschichtung eines Fünf-Schichtsystems Substrat / M1 / T1 / M2 / T2 / S gemäß der WO 01/46718. Amiran und Mirogard sind Bezeichnungen der Schott AG, Mainz.

Die Blockadewirkung der Interferenzbeschichtung wie in Figur 6a gezeigt gegenüber UV-Strahlung beziehungsweise Infrarotstrahlung beruht somit überwiegend auf Reflektion und nicht auf Absorption. Hierdurch kann eine zu starke Erwärmung der beschichteten Gläser vermieden werden.

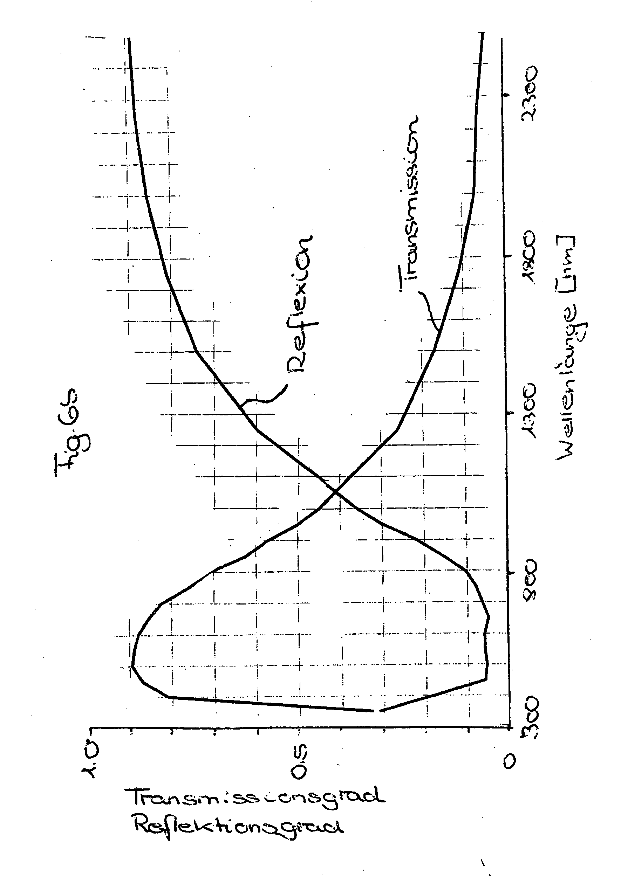

In Fig. 6b ist beispielsweise das Transmissions- und Reflektionsverhalten einer Wärmedämmschicht bzw. einer Sonnenschutzschicht im Wellenlängenbereich von 0,3 bis 2,3 μm gezeigt. Der Schichtaufbau des Schichtsystems umfasst ein Glassubstrat, eine auf dem Glassubstrat aufgebrachte $TiO_2$-Haftschicht mit einem Brechungsindex von n = 2,5, eine darüber angeordnete Silberschicht mit einer Dicke von 12 nm und einer über der Silberschicht aufgebrachten $TiO_2$-Schutzschicht. Auch bei dieser Beschichtung tritt eine niedrige Transmission für Wellenlängen < 420 nm und für Wellenlängen > 780 nm auf.

Mit der Erfindung wir erstmals ein Glaselement angegeben umfassend wenigstens ein historisches Glas mit einer Beschichtung und/oder einer Folie, die UV-Strahlung und/oder IR Strahlung weitgehend blockiert, so dass auf der Innenseite des Glases liegende Objekte geschützt werden.

**Patentansprüche**

1. Glasbauteil,
   umfassend
   wenigstens ein Glaselement (12), wobei das Glaselement (12) aus einem herkömmlichen Glas, wie Schleuderglas, Zylinderglas, Ziehglas, Gussglas, einem geblasenen Glas oder einem Glas mit einer ähnlichen Struktur besteht, wobei
   das herkömmliche Glas (10) eine Beschichtung (20) und/oder eine Folie umfasst, die eine Filterwirkung und/oder eine Absorption für elektromagnetische Strahlung im UV-Wellenlängenbereich mit Wellenlängen < 380 nm und im blauvioletten Wellenlängenbereich zwischen 380 nm und < 420 nm zeigt.

2. Glasbauteil,
   umfassend
   wenigstens ein Glasverbundelement (112, 155), bestehend aus wenigstens einem ersten Glaselement (110, 150) aus einem herkömmlichen Glas wie Schleuderglas,Zylinderglas, Ziehglas, Gussglas, einem geblasenen Glas oder einem Glas mit einer ähnlichen Struktur und
   wenigstens einem mit dem ersten Glaselement (110, 150) durch eine Verbindungsfolie (114, 170) oder eine Verbindungssubstanz verbundenen zweiten Glaselement (100, 160) aus einem Floatglas, wobei das Floatglas eine Beschichtung (120, 175) und/oder Folie aufweist, die eine Filterwirkung und/oder Absorption für elektromagnetische Strahlung im UV-Wellenlängenbereich mit Wellenlängen < 380 nm, und im blauvioletten Wellenlängenbereich zwischen 380 nm und 420 nm zeigt.

3. Glasbauteil nach Anspruch 2, wobei das Glasbauteil des Weiteren ein drittes Glaselement (250) umfasst.

4. Glasbauteil,
   umfassend
   wenigstens ein Glasverbundelement (212), bestehend aus wenigstens einem ersten Glaselement (210) aus einem herkömmlichen Glas wie Schleuderglas, Zylinderglas, Ziehglas, Gussglas, einem geblasenen Glas oder einem Glas mit einer ähnlichen Struktur und wenigstens einem mit dem ersten Glaselement (210) durch eine Verbindungsfolie (214) oder eine Verbindungssubstanz verbundenen zweiten Glaselement (200) aus einem Floatglas und einem dritten Glaselement (250), wobei das dritte Glaselement eine Beschichtung (220) und/oder eine Folie aufweist, die eine Filterwirkung und/oder eine Absorption für elektromagnetische Strahlung, im UV-Wellenlängenbereich < 380 nm und im blauvioletten Wellenlängenbereich zwischen 380 nm und 420 nm zeigt.

5. Glasbauteil nach einem der Ansprüche 1 bis 4, **dadurch gekennzeichnet, dass** die Beschichtung und/oder Folie eine Filterwirkung und/oder eine Absorption für elektromagnetische Strahlung im IR-Wellenlängenbereich mit Wellenlängen > 780 nm zeigt.

6. Glasbauteil nach Anspruch 5, **dadurch gekennzeichnet, dass** die Beschichtung eine IR-reflektierende Beschichtung, insbesondere eine Wärmedämmbeschichtung oder eine Sonnenschutzbeschichtung umfasst.

7. Glasbauteil nach Anspruch 6, **dadurch gekennzeichnet, dass** die Wärmedämmbeschichtung ein "Hard-coating" ist und
   dass das Hard-coating eines oder mehrere der nachfolgenden Metalloxide umfasst:

   $InO_x$:Sn
   $SnO_x$:F
   $SnO_x$:Sb
   $ZnO_x$:Ga
   $ZnO_x$:F
   $ZnO_x$:Al

   oder dass die Wärmedämmbeschichtung oder die Sonnenschutzbeschichtung ein "Soft-coating" ist und das Soft-coating eines oder mehrere der nachfolgenden Materialien umfasst:

Bi-Oxid,
$SnO_2$,
ZnO,
Ti-Oxid
Si-Oxid
$Si_3N_4$
NiCr

8. Glasbauteil nach einem der Ansprüche 1 bis 5, wobei die Beschichtung eine Interferenzbeschichtung umfasst.

9. Glasbauteil nach einem der Ansprüche 5 bis 8, wobei die Beschichtung eine hohe Reflektivität > 20 %, insbesondere > 40 %, bevorzugt > 60 % für Wellenlängen > 780 nm und niedrige Transmission < 70 %, insbesondere < 50 %, insbesondere < 40 %, insbesondere < 30 %, bevorzugt < 20 % für Wellenlängen > 780 nm aufweist.

10. Glasbauteil nach einem der Ansprüche 1 bis 8, wobei die Folie eine niedrige Transmission < 50 %, insbesondere < 40 %, bevorzugt < 30 % für Wellenlängen < 420 nm aufweist.

11. Glasbauteil nach einem der Ansprüche 5 bis 8, wobei die Folie eine niedrige Transmission < 50 %, insbesondere < 40 %, bevorzugt < 20 % für Wellenlängen > 780 nm aufweist.

12. Glasbauteil, umfassend
wenigstens ein Glasverbundelement (512) bestehend aus wenigstens einem ersten Glaselement (510) aus einem herkömmlichen Glas wie Schleuderglas,Zylinderglas, Ziehglas, Gussglas, einem geblasenen Glas oder einem Glas mit einer ähnlichen Struktur und wenigstens einem mit dem ersten Glaselement (510) durch eine Verbindungsfolie (514) oder eine Verbindungssubstanz verbundenen zweiten Glaselement (500) aus einem Floatglas, wobei die Verbindungsfolie (514) und/oder die Verbindungssubstanz eine Filterwirkung und/oder Absorption für elektromagnetische Strahlung im UV-Wellenlängenbereich mit Wellenlängen <380 nm und im blauvioletten Wellenlängenbereich zwischen 380 nm und 420 nm zeigt.

13. Glasbauteil nach Anspruch 12, wobei die Verbindungsfolie eine niedrige Transmission < 50 %, insbesondere < 40 %, bevorzugt < 30 % für Wellenlängen < 420 nm aufweist.

14. Glasbauteil nach einem der Ansprüche 12 bis 13, **dadurch gekennzeichnet, dass** die Verbindungsfolie und/oder Verbindungssubstanz eine Filterwirkung und/oder Absorption für elektromagnetische Strahlung im IR-Wellenlängenbereich mit Wellenlängen > 780 nm zeigt.

15. Glasbauteil nach Anspruch 14, wobei die Verbindungsfolie eine niedrige Transmission < 50 %, insbesondere < 40 %, bevorzugt < 30 % für Wellenlängen > 780 nm aufweist.

16. Verwendung eines Glasbauteiles nach einem der Ansprüche 1 bis 14 für einen der nachfolgenden Zwecke:

- zum Schutz von hinter dem Glasbauteil angeordneten Objekten vor elektromagnetischer Strahlung im Wellenlängenbereich < 420 nm oder im Wellenlängenbereich < 420 nm und im IR-Wellenlängenbereich > 780 nm.
- für gestalterische Zwecke
- als Glas für Fenster in historischen Objekten
- als Glas für Glasfassaden
- als Fassadenelement
- als Glas zum Schutz von Wandmalereien.

**Claims**

1. A glass component, comprising at least one glass element (12), wherein the glass element (12) consists of conventional glass such as centrifugal casting glass, cylindrical glass, drawn glass, cast glass, blown glass, or glass with a similar structure, wherein the conventional glass (10) comprises a coating (20) and/or a film which shows a filter effect and/or an absorption for electromagnetic radiation in the UV wavelength range with wavelengths < 380 nm and in the blue-violet wavelength range between 380 nm and < 420 nm.

2. A glass component, comprising at least one glass composite element (112, 155), consisting of at least one first glass element (110, 150) made of conventional glass such as centrifugal casting glass, cylinder glass, cast glass, blown glass, or a glass with a similar structure, and at least one second glass element (100, 160) made of a float glass which is connected to the first glass element (110, 150) by a connecting film (114, 170) or a connecting substance, wherein the float glass comprises a coating (120, 175) and/or a film which shows a filter effect and/or an absorption for electromagnetic radiation in the UV wavelength range with wavelengths < 380 nm and in the blue-viplet wavelength range between 380 nm and 420 nm.

3. A glass component according to claim 2, wherein the glass component further comprises a third glass element (250).

4. A glass component, comprising at least one glass composite element (212), consisting of at least one first glass element (210) made of conventional glass such as centrifugal casting glass, cylinder glass, cast glass, blown glass, or a glass with a similar structure, and at least one second glass element (200) made of a float glass which is connected to the first glass element (210) by a connecting film (214) or a connecting substance, and a third glass element (250), wherein the third glass element comprises a coating (220) and/or a film which shows a filter effect and/or an absorption for electromagnetic radiation in the UV wavelength range < 380 nm and in the blue-violet wavelength range between 380 nm and 420 nm.

5. A glass component according to one of the claims 1 to 4, **characterized in that** the coating and/or the film shows a filter effect and/or an absorption for electromagnetic radiation in the IR wavelength range with wavelengths > 780 nm.

6. A glass component according to claim 5, **characterized in that** the coating comprises an IR-reflecting coating, especially a thermal insulation coating or a sun protection coating.

7. A glass component according to claim 6, **characterized in that** the thermal insulation coating is a "hard coating" and the hard coating comprises one or several of the following metal oxides:

$InO_x$:Sn
$SnO_x$:F
$SnO_x$:Sb
$ZnO_x$:Ga
$ZnO_x$:F
$ZnO_x$:Al,

or that the thermal insulation coating or the sun protection coating is a "soft coating" and the soft coating comprises one or several of the following materials:

Bi oxide,
$SnO_2$,
ZnO,
Ti oxide
Si oxide
$Si_3N_4$
NiCr

8. A glass component according to one of the claims 1 to 5, wherein the coating comprises an interference coating.

9. A glass component according to one of the claims 5 to 8, wherein the coating has high reflectivity of > 20%, especially > 40%, preferably >60% for wavelengths > 780 nm and low transmission of < 70%, especially < 50%, especially < 40%, especially < 30%, preferably < 20% for wavelengths > 780 nm.

10. A glass component according to one of the claims 1 to 8, wherein the film has a low transmission of < 50%, especially < 40%, preferably < 30% for wavelengths < 420 nm.

11. A glass component according to one of the claims 5 to 8, wherein the film has a low transmission of < 50%, especially < 40%, preferably < 20% for wavelengths > 780 nm.

12. A glass component, comprising at least one glass composite element (512), consisting of at least one first glass element (510) made of conventional glass such as centrifugal casting glass, cylinder glass, cast glass, blown glass, or a glass with a similar structure, and at least one second glass element (500) made of a float glass which is connected to the first glass element (510) by a connecting film (514) or a connecting substance, wherein the connecting film (514) and/or the connecting substance shows a filter effect and/or absorption for electromagnetic radiation in the UV wavelength range < 380 nm and in the blue-violet wavelength range between 380 nm and 420 nm.

13. A glass component according to claim 12, wherein the connecting film has a low transmission of < 50%, especially < 40%, preferably < 30% for wavelengths < 420 nm.

14. A glass component according to one of the claims 12 to 13, **characterized in that** the connecting film and/or the connecting substance shows a filter effect and/or absorption for electromagnetic radiation in the IR wavelength range with wavelengths > 780 nm.

15. A glass component according to claim 14, wherein the connecting film has a low transmission of < 50%, especially < 40%, preferably < 30% for wavelengths > 780 nm.

16. The use of a glass component according to one of the claims 1 to 14, for one of the following purposes:

- for the protection of objects arranged behind the glass component from a electromagnetic radiation in the wavelength range < 420 nm or in the wavelength range < 420 nm and in the IR wavelength range > 780 nm;
- for design purposes;
- as glass for windows in historical objects;
- as glass for glass facades;
- as a facade element;
- as a glass for the protection of wall paintings.

## Revendications

1. Composant en verre comprenant au moins un élément en verre (12), lequel élément en verre (12) est fait d'un verre ordinaire tel que du verre en couronne, du verre en cylindre, du verre étiré, du verre moulé, un verre soufflé ou un verre ayant une structure similaire, dans lequel le verre ordinaire (10) comprend un revêtement (20) et/ou un film produisant un effet de filtrage et/ou une absorption du rayonnement électromagnétique dans la plage de longueur d'ondes des ultraviolets à des longueurs d'ondes < 380 nm et dans la plage de longueurs d'ondes de la lumière bleu-violet entre 380 nm et < 420 nm.

2. Composant en verre comprenant au moins un élément composite en verre (112, 155) composé d'au moins un premier élément en verre (110, 150) fait d'un verre ordinaire tel que du verre en couronne, du verre en cylindre, du verre étiré, du verre moulé, un verre soufflé ou un verre de structure similaire et
au moins un deuxième élément en verre (100, 160) relié au premier élément en verre (110, 150) par un film de liaison (114, 170) ou une substance de liaison et fait d'un verre flotté, lequel verre flotté présente un revêtement (120, 175) et/ou un film produisant un effet de filtrage et/ou une absorption du rayonnement électromagnétique dans la plage de longueur d'ondes des ultraviolets à des longueurs d'ondes < 380 nm et dans la plage de longueurs d'ondes de la lumière bleu-violet entre 380 nm et < 420 nm.

3. Composant en verre selon la revendication 2, lequel composant en verre comprend en outre un troisième élément en verre (250).

4. Composant en verre comprenant au moins un élément composite en verre (212) composé d'au moins un premier élément en verre (210) fait d'un verre ordinaire tel que du verre en couronne, du verre en cylindre, du verre étiré, du verre moulé, un verre soufflé ou un verre ayant une structure similaire et d'au moins un deuxième élément en verre (200) relié au premier élément en verre (210) par un film de liaison (214) ou une substance de liaison et fait d'un verre flotté et d'au moins un troisième élément en verre (250), le troisième élément en verre présentant un revêtement (220) et/ou un film produisant un effet de filtrage et/ou une absorption du rayonnement électromagnétique dans la plage de longueur d'ondes des ultraviolets de < 380 nm et dans la plage de longueurs d'ondes de la lumière bleu-violet entre 380 nm et 420 nm.

5. Composant en verre selon l'une des revendications 1 à 4, **caractérisé en ce que** le revêtement et/ou le film produisent un effet de filtrage et/ou une absorption du rayonnement électromagnétique dans la plage de longueurs d'ondes des infrarouges à des longueurs d'ondes > 780 nm.

6. Composant en verre selon la revendication 5, **caractérisé en ce que** le revêtement comprend un revêtement réfléchissant les infrarouges, en particulier un revêtement isolant thermique ou un revêtement de protection solaire.

7. Composant en verre selon la revendication 6, **caractérisé en ce que** le revêtement isolant thermique est une couche dure et **en ce que** la couche dure comprend un ou plusieurs des oxydes métalliques suivants :

InOx:Sn
SnOx:F
SnOx:Sb
ZnOx:Ga
ZnOx:F
ZnOx:Al

ou **en ce que** le revêtement isolant thermique ou le revêtement de protection solaire est une couche ductile et **en ce que** la couche ductile comprend un ou plusieurs des matériaux suivants :

oxyde de bismuth,
$SnO_2$,
ZnO,
oxyde de titane
oxyde de silicium
$Si_3N_4$
NiCr

8. Composant en verre selon l'une des revendications 1 à 5, dans lequel le revêtement comprend un revêtement à interférence.

9. Composant en verre selon l'une des revendications 5 à 8, dans lequel le revêtement présente un fort pouvoir réfléchissant de > 20 %, en particulier > 40 %, de préférence > 60 % pour les longueurs d'ondes > 780 nm et une faible transmission de < 70 %, en particulier < 50 %, en particulier < 40 %, en particulier < 30 %, de préférence < 20 % pour les longueurs d'ondes > 780 nm.

10. Composant en verre selon l'une des revendications 1 à 8, dans lequel le film présente une faible transmission de < 50 %, en particulier < 40 %, de préférence < 30 % pour les longueurs d'ondes < 420 nm.

11. Composant en verre selon l'une des revendications 5 à 8, dans lequel le film présente une faible transmission de < 50 %, en particulier < 40 %, de préférence < 20 % pour les longueurs d'ondes > 780 nm.

12. Composant en verre comprenant au moins un élément composite en verre (512) composé d'au moins un premier élément en verre (510) fait d'un verre ordinaire tel que du verre en couronne, du verre en cylindre, du verre étiré, du verre moulé, un verre soufflé ou un verre ayant une structure similaire et d'au moins un deuxième élément en verre (500) lié au premier élément en verre (510) par un film de liaison (514) ou une substance de liaison et fait d'un verre flotté, le film de liaison (514) et/ou la substance de liaison produisant un effet de filtrage et/ou une absorption du rayonnement électromagnétique dans la plage de longueur d'ondes des ultraviolets à des longueurs d'ondes < 380 nm et dans la plage de longueurs d'ondes de la lumière bleu-violet entre 380 nm et 420 nm.

13. Composant en verre selon la revendication 12, dans lequel le film de liaison présente une faible transmission de < 50 %, en particulier < 40 %, de préférence < 30 % pour les longueurs d'ondes < 420 nm.

14. Composant en verre selon l'une des revendications 12 à 13, **caractérisé en ce que** le film de liaison et/ou la substance de liaison produisent un effet de filtrage et/ou une absorption du rayonnement électromagnétique dans la plage de longueur d'ondes des infrarouges à des longueurs d'ondes > 780 nm.

15. Composant en verre selon le revendication 14, dans lequel le film de liaison présente une faible transmission de < 50 %, en particulier < 40 %, de préférence < 30 % pour les longueurs d'ondes > 780 nm.

**16.** Utilisation d'un composant en verre selon l'une des revendications 1 à 14 pour l'un des usages suivants :

- pour la protection d'objets disposés derrière le composant en verre contre les rayonnements électromagnétiques dans la plage de longueurs d'ondes de < 420 nm ou dans la plage de longueurs d'ondes de < 420 nm et dans la plage de longueurs d'ondes IR de > 780 nm ;
- à des fins d'aménagement ;
- comme vitre pour les fenêtres de monuments historiques ;
- comme vitre pour des façades vitrées ;
- comme élément de façade ;
- comme vitre pour la protection de peintures murales.

12  Fig. 1

32

AUSSEN    INNEN

~30

10    20

Fig. 2 a

112

120

110

AUSSEN    INNEN

114    100

Fig. 25

Fig. 3a    188

AUSSEN

INNEN

185

180    189

Fig. 3b    192

196    194

AUSSEN

INNEN

190

198

199

Fig 3d

AUSSEN

INNEN

~271

263
261
265 267
269

Fig. 3a

200    240    290.2
              290.1

A

275

AUSSEN              INNEN

210    260    220
              270

212    214    250

280

Fig. 4

300

350

A

AUSSEN              INNEN

310    375

314 320 360

FIG.5

512

510

500

514

Fig. 6a

Fig. 66

Wellenlänge [nm]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19607031
- EP 03076777 A
- GB 599675 A
- GB 594651 A
- WO 0146718 A

**In der Beschreibung aufgeführte Nicht-Patentliteratur**

- Veröffentlichung Transparenz und Sinnlichkeit. Leipra-Verlag, 2001, 31
- **HANS-JOACHIM GLÄSER.** Dünnfilmtechnologie auf Flachglas. Verlag Karl Hofmann, 1999, 155-200, 219-228
- **HANS-JOACHIM GLÄSER.** *Dünnfilmtechnologie auf Flachglas,* 167-171
- **HANS-JOACHIM GLÄSER.** *Dünnfilmtechnologie auf Flachglas,* 155-164
- **HANS JOACHIM GLÄSER.** Dünnfilmtechnologie auf Flachglas. Verlag Karl Hofmann, 155-200, 219-228
- **HANS JOACHIM GLÄSER.** Dünnfilmtechnologie auf Flachglas. Karl Hofmann Verlag, 1999, 155-200
- **HANS JOACHIM GLÄSER.** Dünnfilmtechnologie auf Flachglas. Karl Hofmann Verlag, 1999, 219-227